# EUROPEAN PATENT SPECIFICATION

(11) **EP 3 425 177 B1**
(45) Date of publication and mention of the grant of the patent: **25.03.2020**
(21) Application number: 17179889.5
(22) Date of filing: 05.07.2017
(51) Int. Cl.: F01K 23/16

(54) **A METHOD FOR STARTING UP A COMBINED CYCLE POWER PLANT**
VERFAHREN ZUM STARTEN EINES KOMBIKRAFTWERKS
PROCÉDÉ DE DÉMARRAGE D'UNE CENTRALE ÉLECTRIQUE À CYCLE COMBINÉ

(43) Date of publication of application: 09.01.2019
(73) Proprietor: Ansaldo Energia Switzerland AG, 5401 Baden (CH)
(72) Inventor: RÜTER, Andreas, 5415 NUSSBAUMEN (CH); APPEL, Christoph, 5222 UMIKEN (CH); ROFKA, Stefan, 5415 NUSSBAUMEN (CH)
(74) Representative: Bernotti, Andrea

(56) References cited:
- US-A1- 2011 071 692
- US-A1- 2015 275 703

## Description

### TECHNICAL FIELD

The present invention relates to a method for starting up a combined cycle power plant.

### BACKGROUND

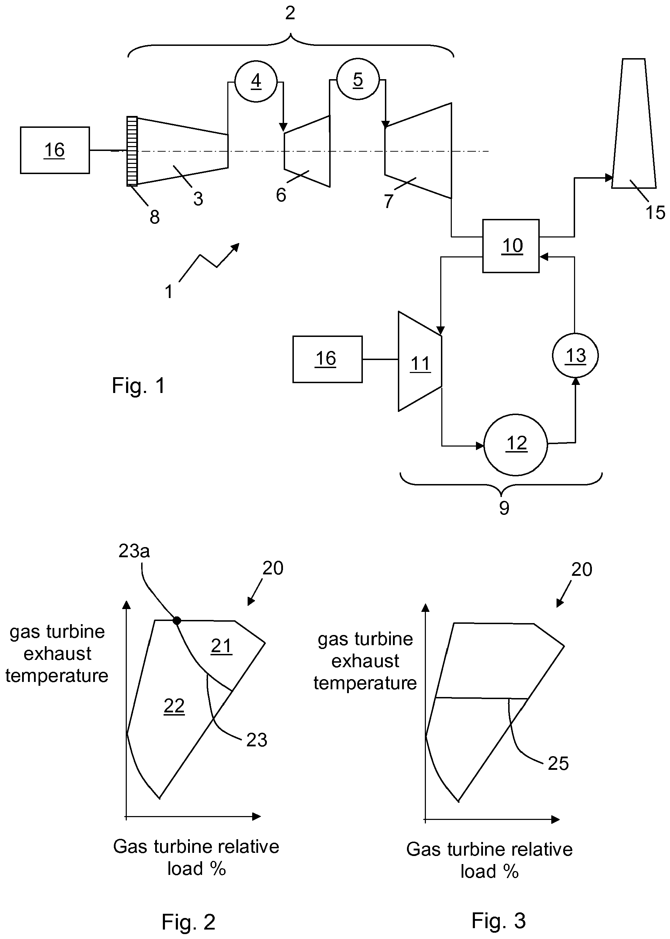

Figure 1 schematically shows a combined cycle power plant 1.

The power plant 1 comprises a gas turbine 2 having a compressor 3, a first combustion chamber 4 and a sequential combustion chamber 5; the first combustion chamber and the sequential combustion chamber can have same or different design being an annular or can design. Between the first combustion chamber 4 and the sequential combustion chamber 5 a high pressure turbine 6 can be provided (but this is not mandatory). Downstream of the sequential combustion chamber 5, the gas turbine 2 has a low pressure turbine 7.

The compressor 3 is provided with variable inlet guide vanes 8 (VIGV), being adjustable vanes provided at the entrance of the compressor 3 in order to regulate the amount of air entering into the compressor 3. At their position of maximum opening the variable inlet guide vanes allow entrance of the maximum air mass flow into the compressor 3 and vice versa at their position of minimum opening the variable inlet guide vanes 8 allow entrance of the minimum amount of air mass flow into the compressor 3.

The gas turbine power can be modulated by regulating the variable inlet guide vane position and the turbine inlet temperature. At constant turbine inlet temperature, the load between the first and the sequential combustion chamber can be modulated to get the required emissions at given exhaust temperature and variable inlet guide vane position.

The power plant 1 further comprises a steam cycle 9 having a reheat boiler (Heat Recovery Steam Generator) 10, fed with exhaust gas from the gas turbine 2, a steam turbine 11, a condenser 12 and a pump 13.

Typically the power plant 1 further has a stack 15, for discharging the exhaust gas that has passed through the reheat boiler 10, and one or more electric generators 16 connected to the gas turbine 2 and/or steam turbine 11.

The operation of these power plants has to meet mechanical and thermal constraints and emission limits.

Figures 2 through 5 schematically show the exhaust temperature versus relative load diagram 20 for a gas turbine; the diagram 20 embraces the theoretical operating area for a gas turbine, which is limited by thermal and mechanical constraints. In addition, figure 2 identifies an emission compliant operating window 21 where it is possible continuous operation of the gas turbine with both the first combustion chamber 4 and the sequential combustion chamber 5 in operation and an area 22 where it is not possible continuous operation of the gas turbine with both the first combustion chamber and the sequential combustion chamber in operation, because of the emissions; the curve 23 identifies the separation between the emission compliant operating window 21 and the area 22 and reference 23a identifies the MEL or minimum environmental load.

Typically, steady state operation of the gas turbines occurs in the operating window 21, while operation in the area 22 is only admitted during transient operation and for a limited time.

Figure 3 shows the threshold exhaust gas temperature (identified by the curve 25) for the gas turbine exhaust temperature, such that when the gas turbine operates at or above the threshold temperature, loading up of the steam turbine can be done without preheating it, and when the gas turbine operates below the threshold temperature, loading up of the steam turbine requires preheating of the steam turbine, in order to limit the lifetime consumption of the steam turbine.

Traditionally, combined cycle power plants are started up by loading up the gas turbine through the high emission area 22.

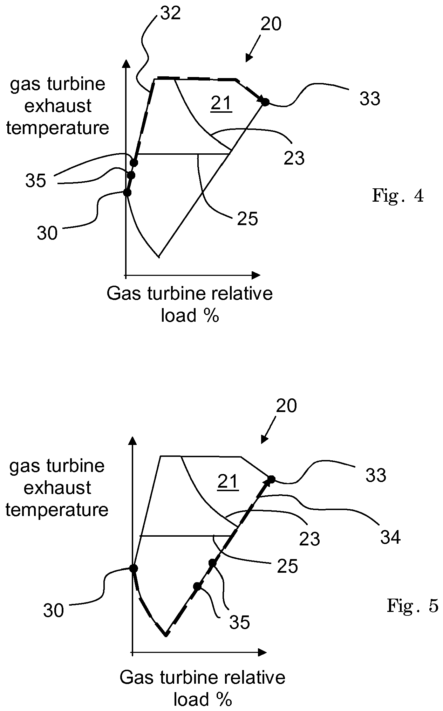

In a first example (figure 4), start up occurs by activating the first and the second combustion chambers 4 and 5 and by loading up the gas turbine from the start operating point 30 along the curve 32, up to the required operating point, e.g. up to the operating point 33.

In a second example (figure 5), start up occurs by activating the first and the second combustion chambers 4 and 5 and by loading up the gas turbine from the start operating point 30 along the curve 34, up to the required operating point, e.g. up to the operating point 33.

In both examples, during loading up the gas turbine is made to operate at hold points, being intermediate operating points between the operating points 30 and 33, in order to heat up the steam turbine; e.g. in the figures the hold points 35 are shown. The power plant can be operated at the hold points also for some hours, for the steam turbine to heat up.

These known start up methods have the disadvantage that they require the gas turbine to operate in the area 22 (with high emission generation, such as CO and/or NOₓ and/or other emissions) for a long time.

Since the speed of the steam turbine loading up is limited by thermal and mechanical constraints (to limit the lifetime consumption of the steam turbine), gas turbine loading up usually requires some hours. Consequently the gas turbine operates with high emission generation for hours.

US 2015/0275703 A1 discloses a method for starting up a combined cycle power plant, wherein the combined cycle power plant comprises a gas turbine with a combustion chamber, a reheat boiler fed with exhaust gas from the gas turbine and a steam turbine fed with steam generated at the reheat boiler. The gas turbine has an emission compliant operating window. According to the method, the gas turbine is loaded up to a first operating point within the emission compliant operating window. Then, the gas turbine is regulated up to a second operating point within the emission compliant operating window and the steam turbine is loaded up.

### SUMMARY

An aspect of the invention includes providing a method for starting up a combined cycle power plant comprising a first combustion chamber and a sequential combustion chamber, the method causing reduced emissions, in particular in comparison with the described known start up methods.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:
Figure 1 shows an example of a combined cycle power plant with a first combustion chamber and a sequential combustion chamber;
Figures 2 and 3 show a diagram representing the gas turbine exhaust temperature versus the gas turbine relative load for a power plant with a steam cycle and a gas turbine having a first combustion chamber and a sequential combustion chamber;
Figures 4 and 5 show traditional start up methods with reference to the gas turbine exhaust temperature versus gas turbine relative load diagram;
Figure 6 shows a diagram representing the gas turbine exhaust temperature versus gas turbine relative load for a power plant with a steam cycle and a gas turbine having a first combustion chamber and a sequential combustion chamber; this figure shows in particular emission compliant operating windows when the gas turbine is operated only with the first combustion chamber or with both the first combustion chamber and the sequential combustion chamber;
Figure 7 shows an embodiment of the start up method with reference to the gas turbine exhaust temperature versus gas turbine relative load diagram;
Figures 8 through 13 show different embodiments of the method with reference to the gas turbine exhaust temperature versus gas turbine relative load diagram.

### DETAILED DESCRIPTION OF EXEMPLARY EMBODIMENTS

The method for starting up a combined cycle power plant is described with reference to the gas turbine exhaust temperature versus gas turbine relative load diagram shown in the attached figures.

The method is implemented in a combined cycle power plant, e.g. of the type described above and shown in figure 1; the combined cycle power plant thus has the gas turbine 2 having the compressor 3 with variable inlet guide vanes 8, the first combustion chamber 4 and the sequential combustion chamber 5. The power plant further has the reheat boiler 10 that can be fed with exhaust gas from the gas turbine 2 and the steam turbine 11 that can be fed with steam generated at the reheat boiler 10.

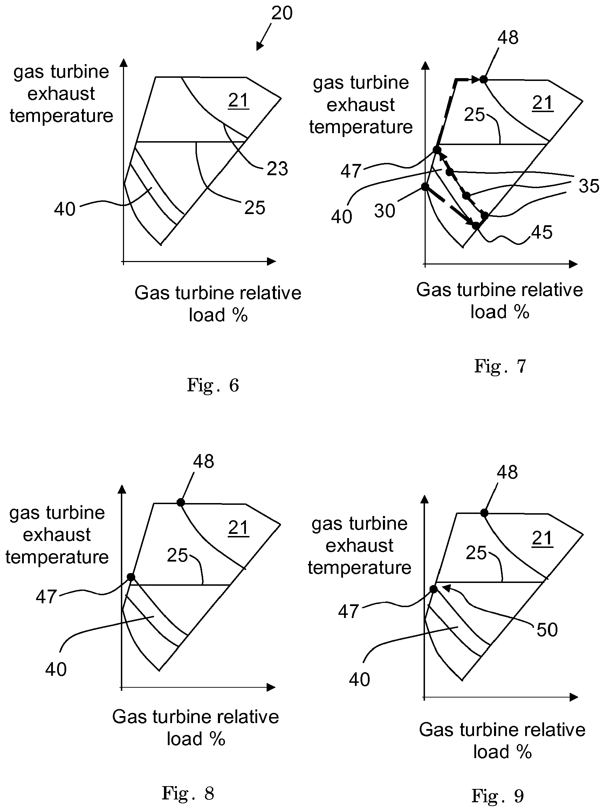

Figure 6 shows a first emission compliant operation window 21, in which continuous emission compliant operation is possible with the gas turbine operated with both the first and the sequential combustion chambers 4, 5.

Figure 6, further shows a second emission compliant operating window 40 where continuous emission compliant operation is possible with the gas turbine operated only with the first combustion chamber 4 (i.e. the sequential combustion chamber 5 is switched off).

Figure 6 also shows the threshold exhaust gas temperature (identified by the curve 25). When the temperature of the exhaust gas discharged from the gas turbine is above the threshold exhaust gas temperature, loading up of the steam turbine can be done without preheating it; in contrast, when the temperature of the exhaust gas discharged from the gas turbine is below the threshold exhaust gas temperature, loading up of the steam turbine requires steam turbine preheating, in order to limit lifetime consumption.

According to the start up method of the combined cycle power plant (figure 7), the power plant is initially at a start operating point 30 (0 power), e.g. with gas turbine having the variable inlet guide vanes 8 in their position of minimum opening (but minimum opening is not mandatory).

From the start operating point 30 the gas turbine is regulated, e.g. loaded up, while operated only with the first combustion chamber 4; in addition, during regulation preferably the variable inlet guide vanes are opened.

In other words, from the start operating point 30, the gas turbine is brought to a first operating point 45, that is within the emission compliant operating window 40 (within the operating window 40 is to be interpreted as comprising an operating points on the curves delimiting the operating window 40). This loading up can be done in a fast way, e.g. in few minutes, e.g. two minutes or less, because the steam turbine 11 is not in operation.

When loading up the gas turbine 2 from the start operating point 30 to the first operating point 45 no hold points are provided.

At the first operating point 45, the gas turbine 2 can have at least partially open variable inlet guide vanes, e.g. the variable inlet guide vanes 8 can be at their position of maximum opening.

Once at the first operating point 45, the gas turbine 2 is further regulated (e.g. deloaded), while operating within the emission compliant operating window 40, bringing the combined cycle power plant to a second operating point 47 within the emission compliant operating window 40. Preferably (if the variable inlet guide vanes 8 are at an at least partly open position) during this regulation the variable inlet guide vanes are closed.

At the second operating point 47, the gas turbine 2 has at least partially closed variable inlet guide vanes 8, e.g. the variable inlet guide vanes 8 can be in their position of minimum opening.

In addition, while regulating the gas turbine in the emission compliant operating window 40, the steam turbine is loaded up; in this respect the exhaust gas from the gas turbine 2 is directed into the reheat boiler 10, to generate steam that is expanded in the steam turbine 11.

Start up of the steam turbine can be done with the required timing, to limit lifetime consumption and without affecting emissions, because the gas turbine 2 is operating within the emission compliant operating window 40.

Preferably, when regulating the gas turbine from the first operating point 45 to the second operating point 47 at least one hold point is provided; usually two or three hold points are provided but it is clear that the number of hold points can be any according to the needs. Figure 7 shows three hold points 35.

From the second operating point 47, the gas turbine 2 is further loaded up by switching on the sequential combustion chamber 5, to bring the gas turbine 2 to a third operating point 48 within the emission compliant operating window 21. Also in this case, operating points on the curve delimiting the operating window 21 are to be interpreted as belonging to the operating window 21.

Figure 8 shows an example in which the second operating point 47 is above the curve 25 (threshold temperature); in this case loading up of the gas turbine 2 by switching on the sequential combustion chamber 5 can be done without constraints imposed by the need of preheating the steam turbine and can be very fast.

Figure 9 shows an example in which the second operating point 47 is below the curve 25 (threshold temperature); in this case even if loading of the gas turbine by switching on the sequential combustion chamber 5 has to meet the constraints imposed by the steam turbine, loading up from the second operating point 47 to the third operating point 48 can be fast, because the gap 50 between the operating point 47 and the threshold exhaust temperature (identified by the curve 25) is small and thus not troubling for a fast loading up of the gas turbine and steam turbine even without hold points.

Therefore, in both cases (i.e. with second operating point 47 above or below the threshold exhaust gas temperature), loading up from the second operating point 47 to the third operating point 48 is very fast, e.g. in the order of few minutes, e.g. ten or eight or seven minutes or less.

Preferably, when loading up the gas turbine from the second operating point 47 to the third operating point 48 no hold points are provided.

In addition, preferably, when loading up the gas turbine from the second operating point 47 to the third operating point 48 the position of the variable inlet guide vanes 8 is not changed and e.g. the variable inlet guide vanes stay in their position of minimum opening.

When operating in the emission compliant operating window 21, the gas turbine can be further loaded, e.g. up to the operating point 33 (maximum power) according to the requirements.

The method allows the start up of the combined cycle power plant with low emissions because the gas turbine operates in the area of high emissions for a very short time. In particular the gas turbine is operated generating high emissions when loaded up from the start operating point 30 to the first operating point 45 and from the second operating point 47 to the third operating point 48; as explained above both these loading up can be completed in short time in the order of minutes.

In contrast, the regulation from the first operating point 45 to the second operating point 47 occurs within the emission compliant operating window 40; therefore even if this regulation requires a long time (e.g. because hold points are provided), the emissions of the power plant are not negatively affected.

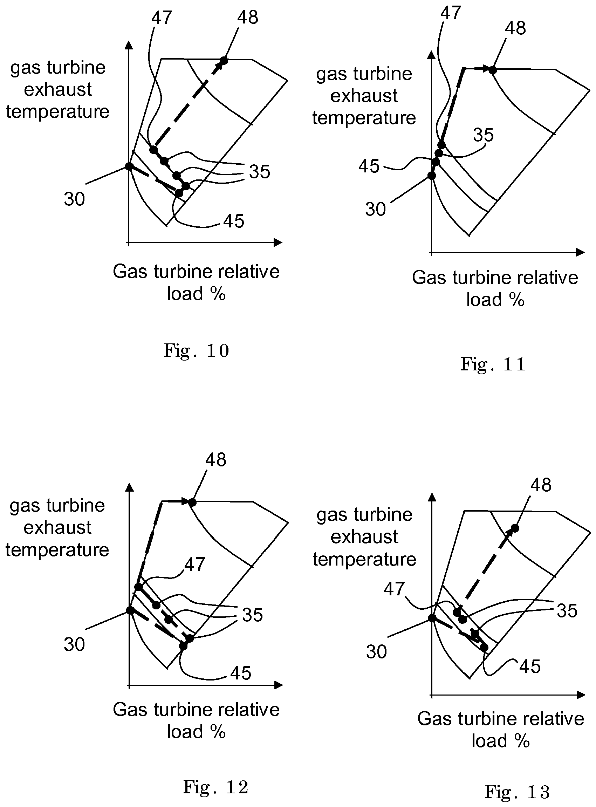

Figures 10 through 13 show different embodiments of the method, in which the regulation from the start operating point 30 to the first operating point 45, the second operating point 47 and third operating point 48 occurs in different conditions.

The embodiment shown in figure 7 has the advantage that the window to load up the steam turbine (together with the gas turbine operated only with the first combustion chamber 4) is very wide and the steam turbine is loaded starting from a low temperature; in addition the combination of temperatures and relative load is particularly favourable (they are high).

The method is beneficial for start up with cold steam turbines and partly warm steam turbines, e.g. for start up where hold points at low gas turbine exhaust temperatures are required to heat up the water steam cycle and steam turbine.

Naturally the features described may be independently provided from one another. For example, the features of each of the attached claims can be applied independently of the features of the other claims.

In practice the materials used and the dimensions can be chosen at will according to requirements and to the state of the art.

### REFERENCE NUMBERS

- 1: power plant
- 2: gas turbine
- 3: compressor
- 4: first combustion chamber
- 5: sequential combustion chamber
- 6: high pressure turbine
- 7: low pressure turbine
- 8: variable inlet guide vanes
- 9: steam cycle
- 10: reheat boiler
- 11: steam turbine
- 12: condenser
- 13: pump
- 15: stack
- 16: electric generator
- 20: theoretical operating area for a gas turbine
- 21: first emission compliant operating window
- 22: high emission area
- 23: separation curve between the emission compliant operating window 21 and the area 22
- 23a: minimum environmental load
- 25: curve representative of the threshold temperature
- 30: start operating point
- 32: curve
- 33: maximum power operating point
- 34: curve
- 35: hold point
- 40: second emission compliant operating window (GT operated only with the first combustion chamber)
- 45: first operating point
- 47: second operating point
- 48: third operating point
- 50: gap

## Claims

1. A method for starting up a combined cycle power plant (1),
wherein the combined cycle power plant (1) comprises a gas turbine (2) with a first combustion chamber (4) and a sequential combustion chamber (5),
a reheat boiler (10) fed with exhaust gas from the gas turbine (2) and a steam turbine (11) fed with steam generated at the reheat boiler (10),
wherein
the gas turbine (2) has a first emission compliant operating window (21) when operated with both the first combustion chamber (4) and the sequential combustion chamber (5),
the gas turbine (2) has a second emission compliant operating window (40) when operated only with the first combustion chamber (4),
the method **characterized by**
operating the gas turbine (2) with only the first combustion chamber (4) and loading up the gas turbine (2) to a first operating point (45) within the second emission compliant operating window (40), then
within the second emission compliant operating window (40), regulating the gas turbine (2) up to a second operating point (47) and loading up the steam turbine (11), then
operating the gas turbine (2) with both the first combustion chamber (4) and the sequential combustion chamber (5) and further regulating the gas turbine (2) to a third operating point (48) within the first emission compliant operating window (21).

2. The method of claim 1, wherein the gas turbine (2) has variable inlet guide vanes (8) for regulating the amount of air passing through it, **characterized by** opening the variable inlet guide vanes (8) when loading up the gas turbine (2) up to the first operating point (45).

3. The method of claim 2, **characterized in that** the first operating point (45) is defined by variable inlet guide vanes (8) at their position of maximum opening.

4. The method of claim 1, wherein the gas turbine (2) has variable inlet guide vanes (8) for regulating the amount of air passing through it, **characterized by** closing the variable inlet guide vanes (8) when regulating the gas turbine (2) from the first operating point (45) to the second operating point (47).

5. The method of claim 1, **characterized in that** the second operating point (47) is defined by variable inlet guide vanes (8) at their position of minimum opening.

6. The method of claim 1, **characterized by** not providing hold points (35) when loading up the gas turbine to the first operating point (45).

7. The method of claim 1, **characterized by** providing at least one hold point (35) when regulating the gas turbine (2) from the first operating point (45) to the second operating point (47).

8. The method of claim 1, **characterized by** not providing hold points (35) when regulating the gas turbine from the second operating point (47) to the third operating point (48).

9. The method of claim 1, **characterized in that** regulating the gas turbine (2) within the second emission compliant operating window (40) up to the second operating point (47) comprises deloading the gas turbine.

10. The method of claim 1, **characterized in that** regulating the gas turbine (2) to a third operating point (48) comprises loading up the gas turbine.

## Patentansprüche

1. Verfahren für den Betriebsanlauf eines Kombikraftwerks (1),
wobei das Kombikraftwerk (1) eine Gasturbine (2) mit einer ersten Brennkammer (4) und einer sequenziellen Brennkammer (5), einen mit Abgas von der Gasturbine (2) gespeisten Abhitzekessel (10) und eine mit dem in dem Abhitzekessel (10) erzeugten Dampf gespeiste Dampfturbine (11) aufweist, wobei
die Gasturbine (2) ein erstes emissionskonformes Betriebsfenster (21) hat, wenn sie sowohl mit der ersten Brennkammer (4) als auch der sequenziellen Brennkammer (5) betrieben wird,
die Gasturbine (2) ein zweites emissionskonformes Betriebsfenster (40) hat, wenn sie nur mit der ersten Brennkammer (4) betrieben wird,
welches Verfahren **gekennzeichnet ist durch**
Betreiben der Gasturbine (2) mit nur der ersten Brennkammer (4) und Laden der Gasturbine (2) bis zu einem ersten Betriebspunkt (40) innerhalb des zweiten emissionskonformen Betriebsfensters (40), dann,
innerhalb des zweiten emissionskonformen Betriebsfensters (40), Regeln der Gasturbine (2) bis zu einem zweiten Betriebspunkt (47) und Laden der Dampfturbine (11), dann
Betreiben der Gasturbine (2) mit sowohl der ersten Brennkammer (4) als auch der sequenziellen Brennkammer (5) und des Weiteren Regeln der Gasturbine (2) auf einen dritten Betriebspunkt (48) innerhalb des ersten emissionskonformen Betriebsfensters (21).

2. Verfahren nach Anspruch 1, wobei die Gasturbine (2) variable Einlassleitschaufeln (8) zum Regulieren der durchtretenden Luftmenge hat, **gekennzeichnet durch** das Öffnen der variablen Einlassleitschaufeln (8), wenn die Gasturbine (2) bis zu dem ersten Betriebspunkt (45) geladen wird.

3. Verfahren nach Anspruch 2, **dadurch gekennzeichnet, dass** der erste Betriebspunkt (45) durch variable Einlassleitschaufeln (8) in ihrer Stellung der größten Öffnung definiert ist.

4. Verfahren nach Anspruch 1, wobei die Gasturbine (2) variable Einlassleitschaufeln (8) zum Regulieren der durchtretenden Luftmenge hat, **gekennzeichnet durch** das Schließen der variablen Einlassleitschaufeln (8), wenn die Gasturbine (2) von dem ersten Betriebspunkt (45) auf den zweiten Betriebspunkt (47) geregelt wird.

5. Verfahren nach Anspruch 1, **dadurch gekennzeichnet, dass** der zweite Betriebspunkt (47) durch variable Einlassleitschaufeln (8) in ihrer Stellung der kleinsten Öffnung definiert ist.

6. Verfahren nach Anspruch 1, **dadurch gekennzeichnet, dass** keine Haltepunkte (35) vorgesehen werden, wenn die Gasturbine bis zu dem ersten Betriebspunkt (45) geladen wird.

7. Verfahren nach Anspruch 1, **dadurch gekennzeichnet, dass** mindestens ein Haltepunkt (35) vorgesehen wird, wenn die Gasturbine (2) von dem ersten Betriebspunkt (45) auf den zweiten Betriebspunkt (47) geregelt wird.

8. Verfahren nach Anspruch 1, **dadurch gekennzeichnet, dass** keine Haltepunkte (35) vorgesehen werden, wenn die Gasturbine von dem zweiten Betriebspunkt (47) auf den dritten Betriebspunkt (48) geregelt wird.

9. Verfahren nach Anspruch 1, **dadurch gekennzeichnet, dass** das Regeln der Gasturbine (2) innerhalb des zweiten emissionskonformen Betriebsfensters (40) auf den zweiten Betriebspunkt (47) das Entladen der Gasturbine umfasst.

10. Verfahren nach Anspruch 1, **dadurch gekennzeichnet, dass** das Regeln der Gasturbine (2) auf einen dritten Betriebspunkt (48) das Laden der Gasturbine umfasst.

## Revendications

1. Procédé pour démarrer une centrale électrique à cycle combiné (1),
dans lequel la centrale électrique à cycle combiné (1) comprend :
une turbine à gaz (2) avec une première chambre de combustion (4) et une chambre de combustion séquentielle (5),
une chaudière de réchauffage (10) alimentée avec les gaz d'échappement provenant de la turbine à gaz (2) et une turbine à vapeur (11) alimentée avec la vapeur générée par la chaudière de réchauffage (10),
dans lequel :
la turbine à gaz (2) a une première fenêtre de commande d'émission compatible (21) lors de la commande à la fois avec la première chambre de combustion (4) et la chambre de combustion séquentielle (5),
la turbine à gaz (2) a une seconde fenêtre de commande d'émission compatible (40) lors de la commande uniquement avec la première chambre de combustion (4),
le procédé étant caractérisé en :
actionnant la turbine à gaz (2) uniquement avec la première chambre de combustion (4) et en chargeant la turbine à gaz (2) à un premier point de commande (45) dans la seconde fenêtre de commande d'émission compatible (40), ensuite dans la seconde fenêtre de commande d'émission compatible (40), en régulant la turbine à gaz (2) jusqu'à un deuxième point de commande (47) et en chargeant la turbine à vapeur (11), ensuite
en actionnant la turbine à gaz (2) à la fois avec la première chambre de combustion (4) et la chambre de combustion séquentielle (5) et en régulant en outre la turbine à gaz (2) sur un troisième point de commande (48) dans la première fenêtre de commande d'émission compatible (21).

2. Procédé selon la revendication 1, dans lequel la turbine à gaz (2) a des pales de guidage d'entrée variables (8) pour réguler la quantité d'air passant par cette dernière, **caractérisé par** l'ouverture des pales de guidage d'entrée variables (8) lors du chargement de la turbine à gaz (2) jusqu'au premier point de commande (45).

3. Procédé selon la revendication 2, **caractérisé en ce que** le premier point de commande (45) est défini par les pales de guidage d'entrée variables (8) dans leur position d'ouverture maximum.

4. Procédé selon la revendication 1, dans lequel la turbine à gaz (2) a des pales de guidage d'entrée variables (8) pour réguler la quantité d'air passant par cette dernière, **caractérisé par** la fermeture des pales de guidage d'entrée variables (8) lors de la régulation de la turbine à gaz (2) du premier point de commande (45) au deuxième point de commande (47).

5. Procédé selon la revendication 1, **caractérisé en ce que** le deuxième point de commande (47) est défini par des pales de guidage d'entrée variables (8) dans leur position d'ouverture minimum.

6. Procédé selon la revendication 1, caractérisé en ne fournissant pas de points de maintien (35) lors du chargement de la turbine à gaz au premier point de commande (45).

7. Procédé selon la revendication 1, caractérisé en fournissant au moins un point de maintien (35) lors de la régulation de la turbine à gaz (2) du premier point de commande (45) au deuxième point de commande (47).

8. Procédé selon la revendication 1, caractérisé en ne fournissant pas de points de maintien (35) lors de la régulation de la turbine à gaz du deuxième point de commande (47) au troisième point de commande (48).

9. Procédé selon la revendication 1, **caractérisé en ce que** la régulation de la turbine à gaz (2) dans la seconde fenêtre de commande d'émission compatible (40) jusqu'au deuxième point de commande (47) comprend le déchargement de la turbine à gaz.

10. Procédé selon la revendication 1, **caractérisé en ce que** la régulation de la turbine à gaz (2) à un troisième point de commande (48) comprend le chargement de la turbine à gaz.
